# EUROPEAN PATENT SPECIFICATION

(11) **EP 2 534 651 B1**
(45) Date of publication and mention of the grant of the patent: **01.06.2016**
(21) Application number: 11707515.0
(22) Date of filing: 10.02.2011
(51) Int. Cl.: G09B 23/32

(54) **METHOD AND APPARATUS FOR IN VITRO TESTING FOR MEDICAL DEVICES**
VERFAHREN UND VORRICHTUNG FÜR IN-VITRO-TESTS FÜR MEDIZINISCHE VORRICHTUNGEN
PROCÉDÉ ET APPAREIL POUR L'ESSAI IN VITRO DE DISPOSITIFS MÉDICAUX

(30) Priority: 12.02.2010 US 704607
(43) Date of publication of application: 19.12.2012
(73) Proprietor: Johnson & Johnson Consumer Inc., Skillman, NJ 08558 (US)
(72) Inventor: HOU, Mari, Basking Ridge, NJ 07920 (US); JUNIO, Joseph, Edison, NJ 08820 (US)
(74) Representative: Kirsch, Susan Edith
(86) International application number: PCT/US2011/024291
(87) International publication number: WO 2011/100393

(56) References cited:
- US-A1- 2005 273 035
- US-A1- 2008 319 273

## Description

### Field of the Invention

The present invention relates to a method and apparatus for in vitro testing of medical devices designed to be inserted into the vaginal cavity. The apparatus is capable of constant pressure and sudden pressure increases which mimic in vivo intra-abdominal pressures. Additionally, the apparatus may be used to test external products that collect bodily fluids discharged from the vagina.

### Background of the Invention

Internal organs and tissues of the human body function while under normal body pressure. Generally, normal body pressure is a constant pressure, which may be altered by doing activities such as exercising, coughing, sleeping, etc. The change in pressure may occur gradually or suddenly.

The vagina is a collapsed tube-like structure which is surrounded by other organs such as the uterus, bladder and rectum. The vagina is also held in place by connective tissue, muscles and ligaments. The interaction of this suspension system allows the vagina to deform and be displaced, especially by the uterus during pregnancy. It is a very complex and dynamic system, one which complicates development of products designed to be inserted into the vaginal canal or worn externally adjacent the labia. In order for a product to function correctly, it must be flexible for the sudden or gradual change in the vagina when the vagina and surrounding tissues undergo increases in pressure.

A commercial tampon can be labeled to have a specific absorbency, which can be determined by a test developed by the FDA (37 CFR 801.430). This test is known as the Syngyna test and involves placing an unlubricated condom in a glass chamber filled with water pumped from a temperature controlled waterbath. Syngyna fluid is then pumped through an infusion tube to the tampon. During the test the tampon is under the pressure of the water within the glass chamber.

An in vitro apparatus and a test method for simulating menstruation and/or incontinence must take all the various issues discussed above into consideration. It must be robust enough to allow for real-life situations. For example, a woman may experience menstrual fluid gushes when she sneezes. Another woman with weak abdominal muscles may experience stress incontinence during a coughing spell. Menstrual fluid may flow differently through the vagina in a supine or sitting position.

Others have tried to address the needs of designing a biomechanical model that could be used as an vaginal model, which could be used for designing products for overcoming some of these issues. For example, U.S. Pat No. 7166085 (Gann et al.) purports to disclose an apparatus for in vitro testing of a tampon and applicator systems. In this patent, there is a target placement position which is achieved by expelling a tampon contained within an applicator into the in vitro receptacle. The in vitro receptacle may be pressurized above ambient atmospheric pressure by use of compressed air. This creates resistance to delivering the tampon into the vagina. WO 2009002648 (Dougherty et al.) purports to disclose in vitro measurement of catamenial tampon systems. In this publication, there is a testing apparatus which includes a pressure vessel assembly, a stand, a pump for delivering fluid such as menses and a pressure regulator. The operating ranges of static pressure within the chamber of the assembly extend from a range of about 0 to 20 psig.

The present invention addresses the problems experienced by menstruating and incontinent women by providing an apparatus and method for designing products such as tampon and incontinence devices that can handle fluid issues resulting from dynamic intra-abdominal pressures.

### Summary of the Invention

We have invented a method and apparatus for simulating a female vagina for use in the in vitro testing of medical devices designed to be inserted into the vaginal cavity.

In one embodiment of the invention, an apparatus for simulating a female vagina includes a pressure chamber, a vaginal model disposed in a pressure chamber and means to deliver liquid into the vaginal model. The pressure chamber includes an interior, first means to provide fluid pressure to the pressure chamber, and second means to provide localized fluid pressure within the pressure chamber. The vaginal model includes a wall that (1) defines a vaginal lumen extending inwardly from a vaginal opening associated with a bore through an exterior surface of the pressure chamber to vaginal fornices adjacent a cervical port; (2) has an outer surface comprising an anterior vaginal surface and a posterior vaginal surface; and (3) has at least one passage for providing a fluid to the cervical port.

Another embodiment of the invention relates to a method for simulating fluid flow in a vaginal model disposed in a pressure chamber. The vaginal model has a wall that (1) defines a vaginal lumen extending inwardly from a vaginal opening associated with a bore through an exterior surface of the pressure chamber to vaginal fornices adjacent a cervical port, (2) has an outer surface comprising an anterior vaginal surface and a posterior vaginal surface, and (3) has at least one passage for providing a fluid to the cervical port. The method includes the steps of (a) providing a first pressure in the pressure chamber; (b) delivering liquid to the at least one passage for providing a fluid to the cervical port; and (c) providing a second pressure to the anterior vaginal surface.

### Brief Description of the Drawings

Fig. 1 is a cross-section of a female abdomen showing the location and orientation of the vagina, uterus, bladder, urethra, and related structures.
Fig. 2 is a schematic drawing of a Simulated Incontinence and Menstruation Apparatus ("SIMA") system according to one embodiment of the present invention.
Fig. 3 is perspective view of a vaginal model useful in the present invention.
Fig. 4 is a perspective view of a pressure chamber of the present invention mounted on a pivot.
Fig. 5 is a front view of the pressure chamber of Fig. 4 containing a vaginal model useful in the present invention.
Fig. 6 is a side view of the pressure chamber of Fig. 4.
Fig. 7 is a schematic diagram of the SIMA system with peripheral equipment.
Fig. 8 is a schematic diagram of an embodiment of an air control panel useful in the present invention.
Fig. 9 is a drawing of a fluid delivery system useful in the present invention.
Fig. 9A is enlarged detail view of the fluid delivery cannula shown in Fig. 9.

### Detailed Description of the Invention

The present invention relates to an apparatus and method for testing and designing intravaginal products which may be more efficient in absorbing fluid in the presence of dynamic intra-abdominal pressures. The apparatus, a Simulated Incontinence and Menstruation Apparatus "SIMA," may be used in conjunction with intravaginal tampons and their absorption of liquids such as bodily fluids. Additionally, the present invention may be utilized with incontinence device such as those as disclosed in U.S. Pub. Nos. 20080009662, 20080033230, 20080009931, and 20080009814, the disclosures of which are herein incorporated by reference in their entirety.

There are two types of pressures that are applied in SIMA: body pressure and intra-abdominal pressures. As used herein the specification and the claims, the term "body pressure" and variants thereof relate to the pressure that is in situ, hydrostatic pressure applied in the body, even at rest. This pressure has been measured to change depending on a woman's position (sitting, standing, supine, etc.). SIMA simulates this pressure by applying a constant pressure in the chamber. This pressure can also be changed to correspond with "real-life" changes or movements such as sitting, lying down, etc. This may also be considered to be generally static (for a given body position), background pressure.

In addition to the generally static, background body pressure, SIMA is capable of providing intra-abdominal pressures. As used herein the specification and the claims, the term "intra-abdominal pressures" and variants thereof relate to those dynamic pressures that are applied to the pelvic system in a downward manner. These pressures may include, without limitation, pressures relating to normal routine activities such as lifting, coughing, laughing, walking, deep breathing, sitting, sneezing, as well as intentionally generated pressures such as through a valsalva maneuver. A valsalva maneuver is typically defined as making a forceful attempt at expiration while holding one's breath and was originally used to clear the ears. Pushing to force a bowel movement or the contraction of the abdominal muscles during a cough or sneeze is included in this definition. This type of valsalva pressure varies from greater than 0 to over 220 cm H₂O (0-3.129 psi) and causes the pelvic organs to descend (coughing generates about 100 cm H₂O pressure). SIMA simulates these movement-derived pressures by applying a direct downward pressure towards the vaginal anatomy.

These movements may also be associated with "stress-type" events, which may result in stress-incontinence or gushing of menstrual fluid flow already resident in the vagina. The movements may be sudden (instantaneous) or of short time duration.

Body pressure varies with activity and position (sitting/standing/lying down). SIMA can simulate these variations in body pressures, from greater than 0 to over 220 cm H₂O (0 - 3.13 psi). Body pressures for non-exerting activities are normally in the range between about 20 cm H₂O to about 50 cm H₂O. On average, body pressure for sitting is about 23 cm H₂O, for standing is 27 cm H₂O and for lying in a supine position, body pressure is about 2.4 cm H₂O. It must be noted that various factors can affect body pressure. For example, body mass index (BMI) can affect body pressure; as BMI increases, body pressure in the abdomen also increases. This is thought to be due to increased gravitational pull on body mass above and around the abdomen bearing on the pelvis and organs located in the pelvic region.

Intra-abdominal pressure increases during exercising or jumping due to increased downward pressure exerted by muscles and or movement of body mass downward on the pelvic organs. This increase in intra-abdominal pressure may be exemplified by an average valsalva pressure of about 88 cm H₂O (standing), and average pressures measured while climbing stairs of about 94 cm H₂O. These values for body pressures and intra-abdominal pressures can be found in Cobb et al., Journal of Surgical Research, v. 129, pp. 231-235 (2005).

As stated above, intra-abdominal or instantaneous pressures result from sudden stress events such as sneezing/coughing and also from intense, slightly longer term pressures such as valsalva. These types of pressures can be simulated in the SIMA system. In SIMA, coughing may be simulated by applying pressure to the vaginal anatomy (75-150 cm H₂O) (1.07-2.13 psi) over a short period of time, typically 1-2 seconds. However, SIMA can be programmed to apply pressure over less time, as low as 0.5 seconds or less. Valsalva maneuvers can be simulated by applying pressure to the vaginal anatomy (50-90 cm H₂O (0.71-1.28 psi) over a longer period of time (5-10 seconds). Of course, what is important is that the intra-abdominal pressure provides an increase in pressure for a relatively short period of time in regards to the static or background body pressure. These pressures may also be repeated within a period of time. For example, coughing may be replicated by a series of three 1 second bursts of pressure, each burst 2 seconds apart.

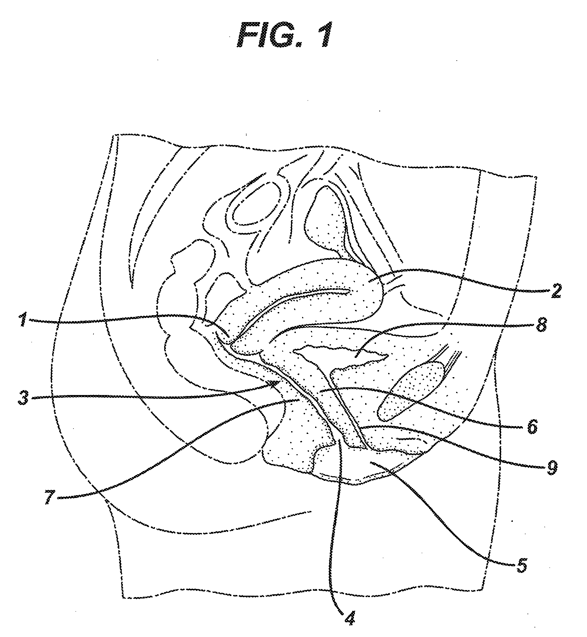

Simulating these intra-abdominal or instantaneous pressures is helpful to understand menstrual fluid flow and its interaction with the anatomy and medical device. Referring to Fig. 1, menstrual fluid flow exits the cervix 1 of the uterus 2 and generally pools in the upper third of the vagina 3. For most women, this portion of the vagina 3 is somewhat horizontal when she is standing. This pooled fluid may then move downward toward the vaginal opening 4 and labia 5 when a woman exerts intra-abdominal pressures such as when coughing, sneezing, or laughing or when she changes in positions from sitting, standing, or lying down. The downward pressures squeeze the anterior and posterior vaginal walls 6, 7 together, causing the fluid to move. In addition, the condition of nearby anatomical structures, including the bladder 8 and urethra 9 may affect or be affected by fluid movement and devices located within the vagina. These dynamic pressures are valuable phenomena to simulate in such a test method, especially for tampons and/or medical devices that involve the movement of liquids such as bodily fluids.

Intra-abdominal pressure is also important to simulate for testing of intravaginal incontinence devices for urinary stress incontinence. It is useful to model stress events such as coughing, laughing, or sneezing which often result in leakage of urine from the bladder and urethra in order to study urinary stress incontinence. Simulating downward intra-abdominal pressures exerted during these events is important to simulate in testing incontinence devices such as pessaries (e.g., to determine their ability to stay-in-place).

The SIMA system includes the vaginal anatomy which was replicated from a 3D computer model. The 3D model was reconstructed from 2D MRI. Having the actual geometry of the vaginal anatomy is an important aspect in understanding how intra-vaginal devices such as incontinence pessaries fit and stay in place in the vagina.

The location of an incontinence device in the vagina is an important factor in an efficacious device. The working section of the device should be applied to the desired portion of an adjacent urinary system. Applicators can be developed and tested in the SIMA system to determine whether they deliver a desired incontinence device to a desired location within the vaginal model. Some devices are designed to be placed at the urethra-vesical (UV) junction, while others may be placed to bear on a mid-urethral location. As SIMA has the full external labial to vaginal anatomy in a pressurized environment similar to an actual woman, SIMA is a useful simulation test method to test various applicator prototypes for its ability to deliver the device to this location.

As used herein, the term "medical device" shall mean those devices that can be inserted into a woman's body to perform a function. For example, vaginal tampons, suppositories, birth control devices such as IUDs and diaphragms, internal incontinence devices and pessaries, and douches, personal lubricant applicators and yeast infection applicators are all examples of medical devices that may be studied in conjunction with SIMA.

SIMA may also be used for the development of other external products such as napkins and liners. By controlling the amount of fluid and the flow of the fluid, napkins and pantyliner function may be investigated. In particular, modeling how a product like a napkin handles gushes of fluid may prove useful in developing a napkin having an improved system of rapid absorbent.

The SIMA system includes the external labial anatomy that is made out of a soft, transparent, and stretchable material. In a preferred embodiment, the labial anatomy was modeled from a woman and cast in the desired material. The movement of fluid along the labia and gushes are important aspects in understanding how external sanitary napkins interact with the anatomy. Fluid movement and gushes can be simulated in the SIMA system.

Examples of fluids that may be used in SIMA include, without limitation syngyna or suitable artificial menstrual fluid. Syngyna fluid is prepared as described in 21 CFR §801.430. Another example of a suitable fluid can be found in U.S. Pub. No. 20070219520 (Rosenfeld et al.). In this disclosure, test fluid was made of the following mixture to simulate bodily fluids: 49.5% of 0.9% sodium chloride solution (VWR catalog # VW 3257-7), 49.05% Glycerin (Emery 917), 1% Phenoxyethanol (Clariant Corporation Phenoxetol®) and 0.45% Sodium Chloride (Baker sodium chloride crystal # 9624-05).

In this invention, SIMA includes at least (1) an in vitro vaginal model that is subjected to an initial pressure and (2) means to provide a secondary pressure. In order to use SIMA for medical device testing, the test device may be inserted while under the initial pressure. The secondary pressure will then be applied afterwards.

In another embodiment, SIMA includes 1) a pressure chamber, 2) means to provide body pressure, 3) means to provide intra-abdominal pressures, 4) a vaginal model, 5) means for providing and controlling of fluid flow to the vaginal model, 6) means to regulate both pressures, 7) means to visualize the effect of the fluid, and 8) means to control and record simulated event(s).

In one embodiment of the invention, recording and monitoring of all simulated events can be accomplished by applying a Data Acquisition System. Requirements of a data acquisition system may include 1) graphical user interface ("GUI") terminal, 2) a local computer, such as a personal computer ("PC"), 3) a programmable logical controller ("PLC"), 4) associated sensors, and 5) control components. Sensor and control component signals are input into the PC/PLC inputs and outputs. Data may be read and processed by the PC/PLC. Data may be displayed on the GUI terminal automatically and in real time. Data, may be saved by the PC into PC memory. One advantage to using a system having a PC is that all data can be saved and retrieved by the user enabling data management, archiving, graphical representation and report generation. Data acquisition includes but is not limited to measurements of 1) body pressure, 2) intra-abdominal pressure, 3) fluid flow, 4) timing and pulsation intervals, 5) date and time stamps, 6) test and user names, etc.

SIMA has the potential to initially have a constant uniform body pressure to replicate normal body pressures and also to replicate sudden intra-abdominal pressure increases, which can simulate coughs, sneezes, and any other movements such as valsalva maneuvers or other intra-abdominal pressure changes. By using the various electronic controllers, one can program SIMA to imitate a single cough or repeat a series of coughs. This ability allows an investigator to examine and study fluid flow through the vaginal model. This will be discussed in greater detail in the Example section.

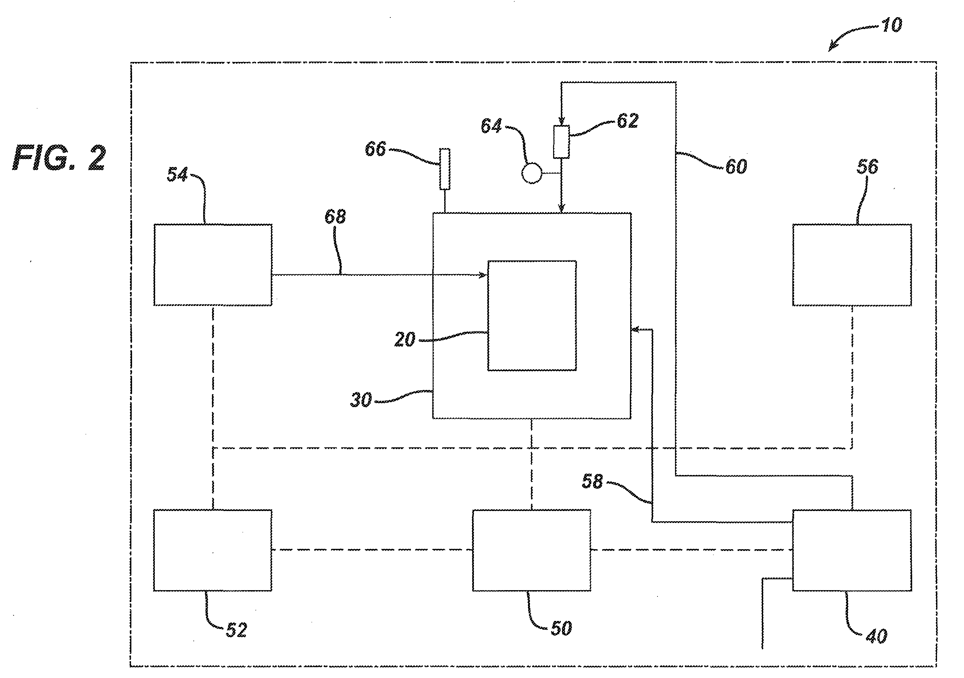

Referring to Fig. 2, there is shown a schematic of one embodiment of the simulation apparatus of the present invention. In this embodiment, SIMA 10 includes a vaginal model 20 contained within a pressure chamber 30 and control elements including an air control panel 40, electrical control panel 50, personal computer (PC) 52, fluid pump 54, and a graphical user interface (GUI) terminal 56. The air control panel 40 is connected to the pressure chamber 30 through body pressure air line 58 and dynamic pressure air line 60, and the dynamic pressure air line 60 is monitored and/or controlled with a solenoid air valve (cough valve) 62, body pressure/intra-abdominal pressure transducer 64 and a pressure relief valve 66. Fluid can be delivered from the fluid pump 54 to the pressure chamber 30 via fluid delivery line 68.

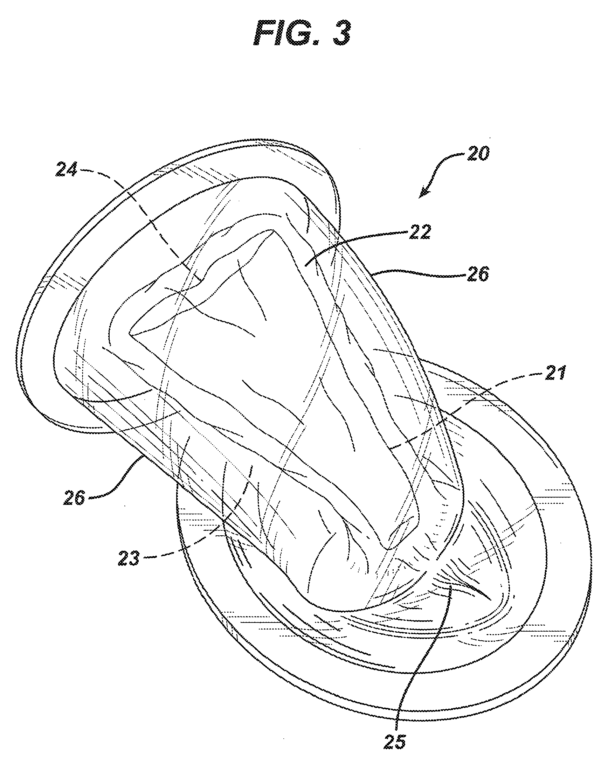

The in vitro vaginal model 20 (shown in detail in Fig. 3) of the present invention includes the internal vaginal lumen 21, the outer geometry of the vagina including the anterior surface 22 and posterior surface 23 with a cervical port 24 at the proximal end for fluid delivery into the vaginal model 20, and the labia 25. In a preferred embodiment, the vaginal model is molded into a single structure. While the vaginal model may be made of any color, it has been found that an optically clear model is preferable. It allows for the path of any fluid or device to be observed during testing.

The vaginal anatomy of the present invention was developed from MRI data of a live female subject. In particular, an MRI of a nulliparous (no vaginal births) woman was obtained in the supine position. Using commercially available software, the internal vaginal lumen and outer geometry of the vagina were traced from the introitus to the cervix. One example of such a software program capable of analyzing the imaging scans is the 3D-Doctor™ program, available from Able Software (Billerica, MA). The 3D-Doctor™ software provides advanced three-dimensional modeling, image processing, and dimensional analysis for various imaging applications including, but not limited to, MRI, CT, PET, microscopy, scientific, and industrial three-dimensional imaging. The 3D-Doctor™ software supports both grey scale and color images stored in DICOM and other image file formats and can create surface model images and volume renderings from two or more two-dimensional cross section images taken in real time on a computer having adequate graphic functions. By simple tracing, specific anatomical features can be viewed separately. The tracings were then lofted into 3D geometry and converted into an .stl file. This 3D model was then used to develop the mold for the vaginal part. MRIs of multiparous women may also be used to form the vaginal model. In the molding the actual vaginal model used in this apparatus, care was taken to provide a realistic model. Difficulties occurred in removal of the model from the mold after curing such that the lateral sides 26 (shown in Fig.3) are thicker than the actual vagina used to create the model. However, care was taken to provide an accurate front wall having the appropriate thickness to represent the actual vagina used in the MRI scans. This importance will become evident below. The labial anatomy of the present invention was developed from a casting of a live woman. The casting was then converted into a 3D CAD (computer assisted drawing) file in order to develop a mold using a digitized probe. The resultant labia information was then combined with the vaginal geometry to create a unitary mold. The unitary mold was used to create the final in vitro vaginal model 20.

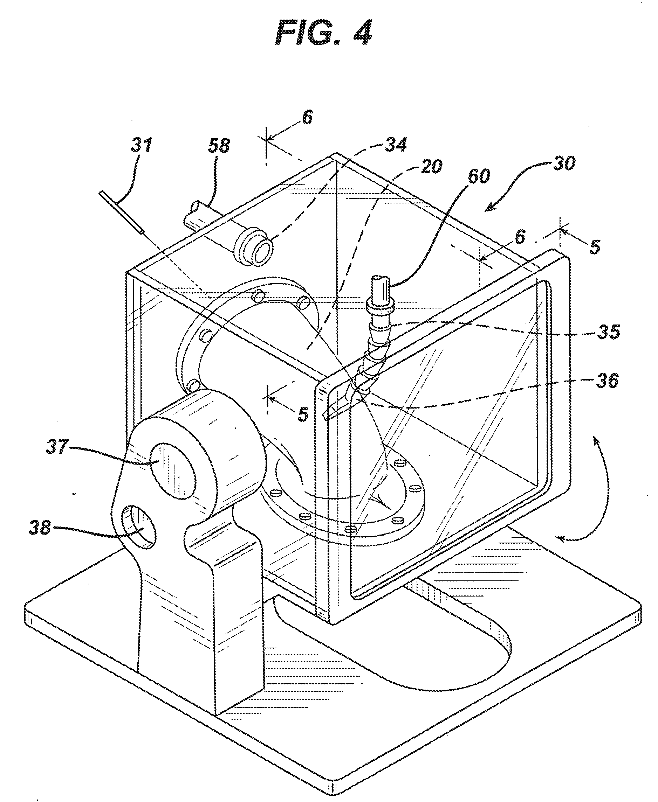

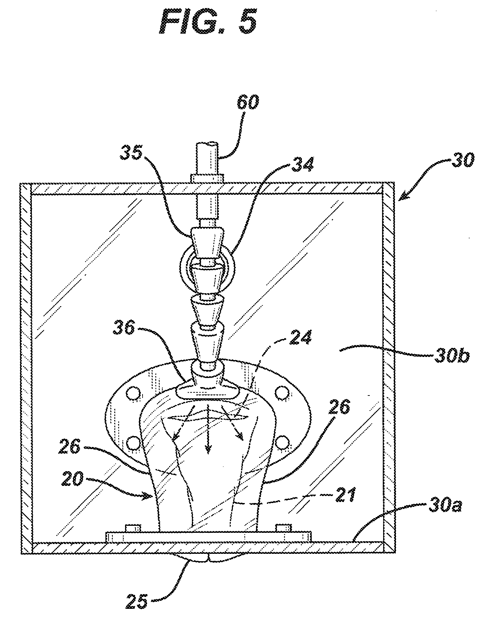

As indicated above, the vaginal model 20 is installed in the pressure chamber 30. This installation is shown in greater detail in Figs. 4-6. The in vitro vaginal model 20 is attached to the bottom floor 30a and back wall 30b of pressure chamber 30 by a series of flanges and/or clamps. The vaginal lumen 21 is shown in the vaginal model 20. Upper portions of the in vitro vaginal model 20 are positioned at an angle α to the bottom floor 30a of the pressure chamber 30. To accurately model the location and orientation of an average human vagina, the vaginal model is installed to provide an angle α between the vaginal lumen proximate to the cervical port 24 and the bottom floor 30a of about 40°.

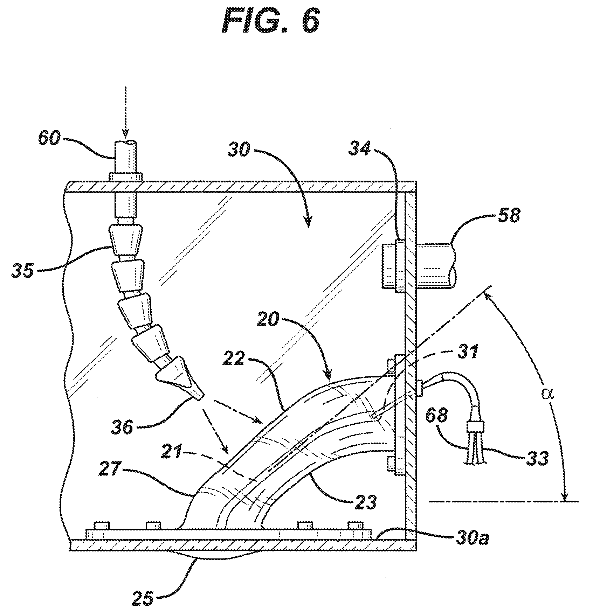

Fig. 6 shows a side view of the vaginal model 20 installed in the pressure chamber 30. The upper portion of the vaginal model 20 is secured to the back wall 30b of the pressure chamber 30 such that fluid can be injected into the vaginal lumen 21 at the top of the vaginal model 20 corresponding to the location of the cervix via a cannula 31. The lower portion of the vaginal model 20 is attached to an opening in the floor 30a in a manner that the labia 25 of the vaginal model 20 extend beyond the opening. Fluid that is delivered from the cannula 31 can then flow through the vaginal lumen 21 and may exit the vaginal model by an opening in the labia 25. In the embodiment of Fig. 6, the fluid delivery can include a first fluid supply to deliver a relatively steady fluid supply via fluid delivery line 68 and a second fluid supply 33 to deliver fluid gushes.

During operation, the pressure chamber 30 is appropriately sealed to maintain background air pressure, the body pressure discussed above. This pressure is established by application of air through one or more air supply ports 34.

Body pressure varies with activity and position (sitting/standing/lying down). SIMA can simulate these variations in body pressures, from greater than 0 to over 220 cm H₂O (0 - 3.13 psi). Body pressures for non-exerting activities are normally in the range between about 20 cm H₂O to about 50 cm H₂O. On average, body pressure for sitting is about 23 cm H₂O, for standing is 27 cm H₂O and for lying in a supine position, body pressure is about 2.4 cm H₂O. Preferably, the background pressure or first pressure in the SIMA system is maintained at greater than about 0 cm H₂O, such as for a supine woman, more preferably, the background pressure is maintained at greater than about 20 cm H₂O. Preferably, the background pressure is less than about 50 cm H₂O. Thus a preferred first pressure range would be between greater than about 0 cm H₂O and about 50 cm H₂O. A more preferred range would be between about 20 cm H₂O and about 50 cm H₂O. The first pressure range is maintained relatively constant during a test simulation. Preferably, the first pressure range or background pressure range is maintained within about 5 cm H₂O, more preferably, within about 2 cm H₂O and most preferably, within about 1 cm H₂O.

As shown in Fig. 6, dynamic intra-abdominal pressure is provided by air flowing through flexible hose 35 and nozzle 36 onto the anterior vaginal surface 22 of a central portion of the in vitro vaginal model 20. As stated previously, the anterior vaginal surface 22 was molded as closely as possible to the actual nulliparous vagina imaged.

The pressure chamber 30 is mounted on a pivoting support to permit the system to model a woman in a range or orientations from standing to supine or lying flat on her back. This is shown in Fig. 4 showing the pressure chamber 30 mounted on a pivot 37 with a release pin 38 to maintain the desired orientation.

As detailed above and shown in the figures, the vagina can be characterized as a cone-shaped structure with the proximal end (upper fornices) being wider than the distal end (introitus). The anterior and posterior walls of the vagina are also collapsed together, even with an intra-vaginal device in place. These walls however can also open and close, depending on the woman's positioning, muscle structure, and activity. Intra-vaginal pressures help fluid move between these walls by compressing the walls together. The vagina is also curved in the sagittal (side) view. The vagina extends generally vertically from the introitus to a "vaginal flexure" at which it begins to curve to an angle α of about 40° from the horizontal. This vaginal flexure 27 is about 5 cm above the introitus in the SIMA model based upon the subject from which the vaginal model 20 was derived. This difference could affect how an intra-vaginal device is placed in the vagina and consequently the perceived wearing comfort of the device. Factors that affect the vaginal flexure of the vagina could include genetics, muscle structure and strength as well as ligaments and tendons joining the muscle structure, and pelvic bone structure. In a preferred embodiment shown in Figs. 3-6, the vaginal model contains a casting of a nulliparous vagina, which has the dimensions of 9 cm in length and 5 cm in width (at the widest location at the proximal end).

Other embodiments may contain primiparous and/or mulitparous vagina, which differs from a nulliparous vagina in mainly the width and supporting structures (angle) of the vagina. MRI studies of mulitiparous women showed that the vaginal width at the widest part of the vagina (proximal end, near fornices) ranges from 3.5 to 5.7 cm. Supporting structures to the vagina can decrease in strength with damage to the pelvic floor muscles due to child birth, genetics, surgery, increased weight gain, and other factors. SIMA model can simulate this change in support structure by changing the angle of the in vitro vaginal model. In addition, the length of the vagina can vary widely from woman to woman. In other embodiments, SIMA system can simulate these anatomical differences in order to better understand how these factors affect menstrual fluid flow and its interaction with a tampon or the vaginal anatomy and an incontinence device.

Any materials may be used to create the final vaginal model. Materials that may be molded but retain a certain flexibility are preferred. Other materials useful for making the vaginal model may include but are not limited to silicones (including room-temperature vulcanizing silicone rubber), polyethylene, castable polyurethane, plasticized polyvinyl chloride, styrene-butadiene, thermoplastic elastomers, rubber latex, and the like. Preferred materials include thermoplastic elastomeric materials such as Santoprene™ brand thermoplastic vulcanates (TPV) (Supplier: Exxon Mobil Chemical, Houston, Texas, USA). In one preferred embodiment, the vaginal model is made from a 30:60 blend of DS-302 and DS-303 (California Medical Innovations, Pomona, California). Materials that can be molded but are clear after curing are also preferred.

The materials may be heated until liquefied and then poured into the mold. The filled mold may be placed into an oven for curing for a period of time. The vaginal model is then released from the mold. Once it has cooled, it is mounted into the support platform.

The molded labia provide a resistance normally seen in women during insertion of a medical device. The vaginal model also provides realistic resistance to the medical device in that the model is provided at an angle (as in a female body) and the interior walls are a flat cone-like shape. The material chosen to make the vaginal model is important as the material may affect the flexibility of the molded labia and molded vagina. A medical doctor (urologist) performed a pelvic examination of the in vitro SIMA vagina and found it to be realistic to a typical female patient.

### Examples

The following examples will detail how the vaginal model described above is used.

### Example 1

An example of SIMA was constructed for this example using the diagram shown in Fig. 2. The following is a discussion of the details and components.

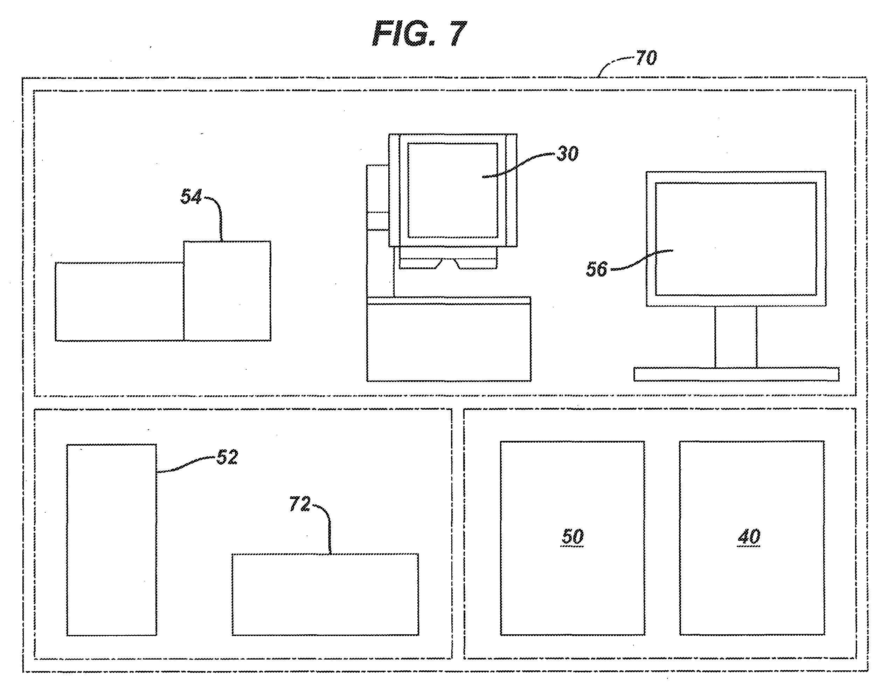

In one preferred embodiment shown schematically in Fig. 7, the pressure chamber 30, fluid pump 54, and GUI terminal 56 were located within a safety hood 70. In addition to the safety hood 70, associated compartments held an air control panel 40, electrical control panel 50, local computer, e.g., a PC 52, and a printer 72. In this example, the pressure chamber 30 was situated within the hood 70 for safety purposes even though safety pressure relief valves, e.g., 66 were used.

As in Fig. 2, the pressure chamber 30 provided a closed environment which allowed the in vitro vaginal model 20 to be subjected to pressure replicating background body pressure and dynamic intra-abdominal pressure. Body pressure was provided by maintaining the interior of pressure chamber 30 under constant pressure. Intra-abdominal pressure was introduced as air pressure directed on the anterior vaginal surface 22 on the in vitro vaginal model 20. Both of these pressures were provided by the air control panel 40 and associated controls discussed below. The body pressure air line 58 of Fig. 2 supplied air to air supply port 34 of Fig.4-6. The dynamic pressure air line 60 of Fig. 2 supplied air to the flexible air supply hose 35 and nozzle 36 for directing the dynamic intra-abdominal pressure onto the anterior vaginal surface 22 of Fig. 4-6.

As shown in Fig. 2, a pressure transducer 64 was connected to the air solenoid valve 62 to measure air pressure of the intra-abdominal pressure simulation elements. This pressure transducer measured both the air pressure within pressure chamber (modeling the background body pressure) and the dynamic (inter-abdominal) pressure or impulse pressure provided to the vaginal model 20 via dynamic pressure air line 60.

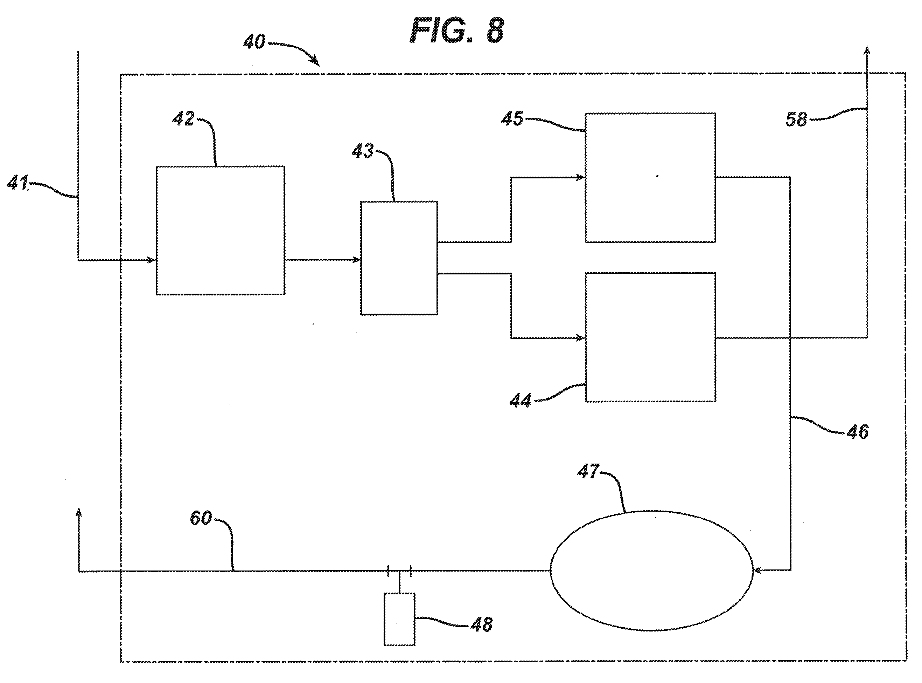

Fig. 8 is a schematic diagram of the air control panel 40, which may be located below the rest of the SIMA apparatus. The air control panel 40 had a pressurized air supply 41 connected to a pressure regulator 42. Downstream of the pressure regulator 42, a solenoid valve 43 delivered pressurized air to either of two proportional valves. A first proportional valve 44 having an integral pressure sensor for pressure regulation related to the body pressure system and delivered body pressure to the pressure chamber 30 via body pressure air line 58 (Fig. 2) to air supply port 34 (Figs. 4-6). By means of a proportional valve, the pressure was regulated to provide constant body pressure and to release the pressure once testing is complete.

A second proportional valve 45 having an integral pressure sensor for pressure regulation related to the intra-abdominal pressure system and delivered pressurized air via air line 46 to an accumulator tank 47. Again, the proportional valve regulates the pressure in the accumulator tank 47 to provide constant intra-abdominal pressure supply and to release pressure once testing is complete. The accumulator tank 47 was connected to the pressure chamber solenoid air valve (cough valve) 62 (Fig. 2) at the pressure chamber 30 via the dynamic pressure air line 60. The pressure chamber solenoid air valve 62 can be switched "On" and "Off' at defined time intervals to deliver the intra-abdominal pressure pulses to the in vitro vaginal model 20. A pressure relief valve 48 was located at exit of air accumulating tank 47 and was used as protection in case of over pressurization of the system.

The SIMA pressurization system allows for precise control of air pressure inside the pressure chamber 30 (body pressure). As air was introduced into the pressure chamber 30 to simulate dynamic intra-abdominal pressure, the air pressure in the pressure chamber 30 (the body pressure) increased momentarily. Once the intra-abdominal pressure delivery ended, the body pressure gradually readjusted, automatically, to the original body pressure setting. Pressure relief valve 66 (Fig. 2), located on top of pressure chamber 30 provided additional protection in case of over pressurization of the chamber 30.

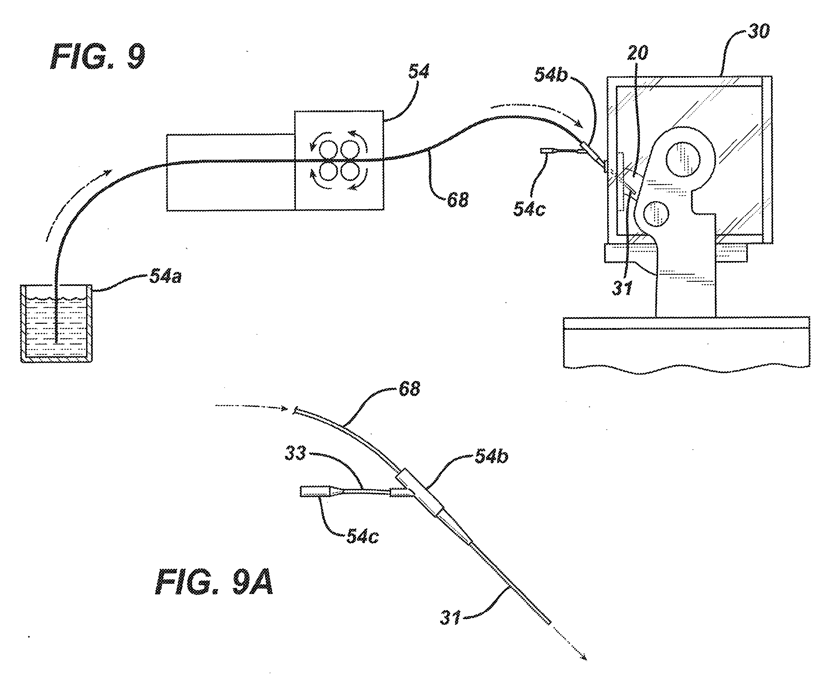

As shown in Fig. 9, a fluid pump 54 to deliver simulated menstrual fluid was'located near the pressure chamber 30. While any pump can be used, it is important to precisely control the delivery of the fluid. For example, the pump was able to provide the fluid at a steady rate or in spurts (to imitate gushes). Fluid from reservoir 54a was delivered by the fluid pump 54 through tubing 68. As shown in Fig. 9A, junction 54b linked tubing 68 to cannula 31, which provided fluid into the cervical port 24 of the in vitro vaginal model 20. Junction 54b also had a second fluid input port 54c that accommodated a syringe for alternative fluid injection (independent or in conjunction with fluid delivery via 68).

One example of a suitable fluid pump is made by Watson-Marlow Model 520 Di with Pump Head Model 505L, which was used for this example. While for medical devices such as tampon, an artificial menstrual fluid is preferred, other fluids may be substituted.

As shown in Figure 4, the pressure chamber 30 was mounted on a pivot 37. This allowed the pressure chamber 30 to rotate such that the in vitro vaginal model 20 could be oriented as if in a standing position, sitting or supine position. In an alternative embodiment (not shown), a secondary pivoting means may rotate the box to mimic side turning or sleeping. In the embodiment shown in the figures, the pivoting means rotated the entire pressure chamber 30 until the desired position at which point release pin 38 was engaged. Upon completion of the test, release pin 38 was disengaged to permit the pressure chamber 30 to return to its original position.

In vitro vaginal model 20 included vaginal lumen 21, cervical port 24, and labia 25. Intra-abdominal pressure nozzle 36 was disposed adjacent to the central portion of anterior vaginal surface 22 of the in vitro vaginal model 20 (Fig. 4-6).

Synthetic menstrual fluid was delivered through the cervical port 24 via cannula 31, and it flowed within the vaginal lumen 21, and out through the labia 25 (Figs. 4-6). During the testing of a medical device, the device was inserted into the vaginal model 20 prior to introducing the synthetic menstrual fluid.

In the embodiment shown in the figures, the temperature was room temperature but additional controls may be put into place to elevate or lower the temperature of the interior of the box, which would include the vaginal model and fluid.

SIMA allows for two modes of operation - manual and automatic. These modes are further discussed in Examples 2 and 3.

Another advantage to a system like SIMA is the ability to capture data. It is also possible to monitor the test by video recording devices and/or taking photographs during the testing as the vaginal model can be transparent.

Whenever testing commences, the data acquisition system can also commence automatically. The data acquisition system is capable of, but not limited to, recording of events at specified sampling rate and recording the date, time, test name, user name, body pressure, intra-abdominal pressure at accumulating tank, intra-abdominal pressure delivered to the vaginal model, menstrual pump flow and menstrual pump flow events. During the recording period, the data is saved to the PC hard drive under an assigned file name. Data is saved in comma-delimited format, also referred to as comma-separated values (CSV) format and can be imported into an Excel spreadsheet. Data can be imported into an Excel spreadsheet to enable further data visualization, data management, data archiving, graphical representation and report generation.

During the data acquisition process, the acquired data can be viewed in real-time on the Graphical User interface (GUI) terminal. It is possible to go forward and backward in time using the arrows to either side of the pause button. Pressing the pause button again will bring the trend screen back into real-time monitoring. The capability also exists to perform print screen function.

### Example 2 - Manual Mode

Step A - Prior to using the apparatus, artificial menstrual fluid is prepared according to patent publication US 20070219520. The computer, monitor, and fluid pump is turned on. The internal vaginal cavity is cleaned of any residual menstrual fluid from previous testing by using a cotton swab and the pump is flushed with water until the hosing is clean. Next, the vaginal cavity is primed with artificial menstrual fluid prior to testing. The fluid pump is calibrated and the cannula is placed within the cervix opening of the vaginal model. The box is then closed and set into the desired testing position (sitting, standing, or supine). A tampon is weighed without the cello wrap (example: commercial o.b.® tampon regular absorbency made by McNeill Consumer Products). A small amount (∼0.1-0.2 grams) of KY gel® is placed on the tip of the tampon (to facilitate insertion). The tampon is weighed tampon with KY and the weight recorded. The tampon is inserted into the opening of the labial portion. In some cases, it is preferred to place the tampon to the left side of the vagina as tampons are typically placed on the lateral wall of the vagina (either left or right). The placement of the tampon is recorded, as measured from the cervix. In a preferred embodiment, the tampon is placed about 10 mm below the cervix.
Step B - On the touch screen controls, the "Manual mode" of operation is selected. The desired body pressure is selected (in cm H₂O). In a preferred embodiment, 27 cm H₂O was selected to simulate a standing position. The green switch "On" (next to the heading "Body Pressure") is depressed to engage body pressure. The cough pressure is selected (in cm H₂O). In one preferred example, 146 cm H₂O was selected. Additionally, the "cough on time" and "cough full cycle time" is selected. The "cough on time" represents the duration of the single cough and in a preferred embodiment, 1.0 second was selected. The "cough full cycle time" represents the time period during which the cough will occur. In a preferred embodiment, 10 seconds is selected. These settings will provide a 1 (one) second cough every 10 seconds for a cough pressure of 146 cm H₂O. The green switch "ON" (Next to the heading Cough Pressure) is depressed to engage the cough pressure. Next the menstrual flow in mL/Min is entered. In a preferred embodiment, 1 mL/Min is entered. The "Flow On Time" is entered, which is the duration of the flow. In a preferred embodiment, 10 seconds is selected. The "flow full cycle time" is entered. In one preferred embodiment, 20 seconds is selected. This setting will provide 10 seconds of fluid flow every 20 seconds. The pump calibration value is entered and the green "ON" button (next to the heading "Menstrual Flow") depressed to engage the menstrual flow.
Step C - The start button is depressed to start testing. Video recording and/or digital photographs may be obtained during testing. To stop testing, the Stop button is depressed.
Step D - At the conclusion of the test, the tampon is carefully removed and the stain pattern and weight is recorded. The internal vaginal anatomy of the vaginal model is cleaned by using a cotton swab and the fluid pump/hosing flushed with water.

### Example 3 - Automatic Mode

### Repeat Step A from Example 2

Step B - On the touch screen controls, press the "Automatic mode" of operation. This mode of operation allows a user to re-run a previously set up "recipe" or enter the parameters for a new one. As used herein, the term "recipe" shall mean the combination of pressures (body, intra-abdominal), time sequences, and flow, all of which happen at preset times intervals. If this is a first time recipe, the user inputs the information and creates a recipe name or number, which is then saved. For example, the conditions of Step B of the manual mode are inputted and saved as a new recipe. Parameters such as body pressure and step length (length of time you would like to run the entered body pressure in seconds) are entered. Likewise, the cough pressure recipe is selected, which includes the cough pressure in cm H₂O, cough on time in seconds, full cycle time in seconds, count (number of times you would like to run the cycle), and the step length (count x full cycle time). The menstrual flow recipe is entered in mL/min, flow on time in seconds, full cycle time in seconds, count (number of times the cycle is to run), and the step length (count x full cycle time). The save button is engaged at the top of the screen to save this recipe.
Step C - The testing is begun by pressing the start button. Video recording and/or digital photographs may be obtained during testing. The system completes its cycle automatically, or it is manually stopped, as appropriate.
Step D - At the conclusion of the test, the tampon is carefully removed and the stain pattern and weight is recorded. The internal vaginal anatomy of the vaginal model is cleaned by using a cotton swab and the fluid pump/hosing flushed with water.

The user may also edit or run a previously entered "recipe", which would include other cycles, trends, etc.

For both the manual and automatic mode of running SIMA, the instantaneous pressure may be manually repeated or automatically programmed to repeat at certain time intervals. For example, SIMA may be used to study the effects of coughing every 60 seconds, each cough being 1 second in duration. This means that the vaginal model of SIMA may be under a "body pressure" of 30 cm H₂O for 60 seconds, with the "intra-abdominal pressure" reaching 150 cm H₂O for 1 second. This trending seeks to replicate the body dynamics of a menstruating or incontinent woman when she coughs-a body action which is intense and brief.

### Example 4 - Use with external sanitary products

The SIMA system includes the external labial anatomy, which was casted from a woman, is made out of a soft, transparent, and stretchable material. The movement of fluid along the labia and gushes are important aspects in understanding how external sanitary napkins interact with the anatomy. Fluid movement and gushes can be simulated in the SIMA system.

The SIMA system is setup with the same parameters used in any of Examples 1-3. Body pressure is applied to the system at 27 cm H₂O, cough pressure is set to 146 cm H₂O (with a cough on time of 1 second and full cycle time of 10 seconds), and menstrual fluid flow is set to 1 mL/min with the flow on for 10 seconds over a 20 second cycle. Gushes (3mL) are also introduced to the system after 3 minutes of flow using a syringe. A Stayfree® regular ultrathin napkin is manually applied against the SIMA system and the fluid movement and interaction with the anatomy is observed. Time to leak and add-on (in grams) are recorded. Observations are made on how the fluid moves along the body and interacts with the napkin. These observations are important in developing new insights into the absorbent system of napkins and how leakage can occur.

### Example 5 - Use with intravaginal incontinence devices

The SIMA system includes the vaginal anatomy which was replicated from a 3D vaginal computer model. The 3D model was reconstructed from 2D MRI. Having the actual geometry of the vaginal anatomy is an important aspect in understanding how intra-vaginal devices such as incontinence pessaries fit and stay in place in the vagina.

The SIMA system is set up with the same pressure parameters used in Examples 1-3. Body pressure is applied to the system at 27 cm H₂O and cough pressure is set to 146 cm H₂O (with a cough on time of 1 second and full cycle time of 10 seconds). Menstrual fluid flow is turned off for incontinence device testing. The incontinence device is inserted into the vagina and the device's ability to stay in place is recorded and observed.

The specification and embodiments above are presented to aid in the complete and non-limiting understanding of the invention disclosed herein. Since many variations and embodiments of the invention can be made without departing from its scope, the invention resides in the claims hereinafter appended.

## Claims

1. Apparatus for simulating anatomical structures disposed in a lower abdominal cavity of a human female, including a female vagina (20), the apparatus comprising:
a) a pressure chamber (30) comprising:
i) an interior;
ii) first means (58) provide fluid pressure to the pressure chamber; and
iii) second means (35, 36, 60) to provide localized fluid pressure within the pressure chamber;
b) a vaginal model (20) disposed in the interior of the pressure chamber (30) and comprising a wall:
i) defining a vaginal lumen (21) extending inwardly from a vaginal opening (25) associated with a bore through an exterior surface of the pressure chamber to vaginal fornices adjacent a cervical port (24),
ii) having an outer surface comprising an anterior vaginal surface (22) and a posterior vaginal surface (23), and
iii) having at least one passage for providing a fluid to the cervical port (24), and
c) means (31, 54, 68) to deliver liquid to the at least one passage for providing a fluid to the cervical port.

2. Apparatus of Claim 1, wherein the first means to provide fluid pressure comprises an air pressurization system.

3. Apparatus of Claim 1, wherein the second means to provide localized fluid pressure within the pressure chamber comprises an air pressurization system.

4. Apparatus of Claim 3, wherein the second means to provide localized fluid pressure comprises an air delivery nozzle proximate the anterior vaginal surface of the vaginal model.

5. Apparatus of Claim 3, wherein the second means to provide localized fluid pressure is controlled to deliver pressure to model dynamic pressures selected from the group consisting of lifting, coughing, laughing, walking, deep breathing, sitting, sneezing, as well as intentionally generated pressures such as through a valsalva maneuver.

6. Apparatus of Claim 1, wherein the pressure chamber is rotatable about a pivot.

7. Apparatus of Claim 1, wherein the vaginal model further comprises a vaginal flexure.

8. Apparatus of Claim 1, further comprising a programmable controller.

9. Apparatus of Claim 1, wherein the vaginal lumen is arranged and configured to accept the feminine hygiene product through the bore.

10. A method for simulating fluid flow in a vaginal model disposed in a pressure chamber, the vaginal model having a wall that (1) defines a vaginal lumen extending inwardly from a vaginal opening associated with a bore through an exterior surface of the pressure chamber to vaginal fornices adjacent a cervical port, (2) has an outer surface comprising an anterior vaginal surface and a posterior vaginal surface, and (3) has at least one passage for providing a fluid to the cervical port, the method comprising the steps of:
a) providing a first pressure in the pressure chamber;
b) delivering liquid to the at least one passage for providing a fluid to the cervical port; and
c) providing a second pressure to the anterior vaginal surface.

11. The method of Claim 10, wherein the first pressure is substantially maintained during a simulation.

12. The method of Claim 11, wherein the first pressure is maintained between about 20 cm H₂O to about 50 cm H₂O.

13. The method of Claim 12, wherein the first pressure is maintained within about 5 cm H₂O of a median pressure during the simulation.

14. The method of Claim 10, wherein the second pressure is greater than the first pressure.

15. The method of Claim 10, wherein the second pressure is at least about 50 cm H₂O or at least about 75 cm H₂O.

16. The method of Claim 10, wherein the second pressure is provided for a portion of a simulation.

17. The method of Claim 16, wherein the second pressure is provided intermittently during the simulation.

18. The method of Claim 17, wherein the second pressure is provided for a duration of less than about 10 seconds per application during the simulation, or for a duration of less than about 5 seconds per application during the simulation.

19. The method of claim 10, wherein the second pressure varies during a simulation.

20. The method of Claim 10, further comprising the step of orienting the vaginal model consistent with a standing woman, a supine woman, or varying therebetween.

## Patentansprüche

1. Vorrichtung zur Simulierung von in einer unteren Bauchhöhle einer Frau angeordneten anatomischen Strukturen, einschließlich einer weiblichen Vagina (20), wobei die Vorrichtung Folgendes umfasst:
a) eine Druckkammer (30), umfassend:
i) einen Innenraum,
ii) erste Mittel (58) zur Bereitstellung von Fluiddruck für die Druckkammer und
iii) zweite Mittel (35, 36, 60) zur Bereitstellung von örtlichem Fluiddruck in der Druckkammer,
b) ein Vaginamodell (20), das im Innenraum der Druckkammer (30) angeordnet ist und eine Wand umfasst, die
i) ein Vaginalumen (21) definiert, das sich von einer Vaginaöffnung (25), die einer Bohrung durch eine äußere Fläche der Druckkammer zugeordnet ist, nach innen zu Vaginalfornices erstreckt, die einem Zervix-Port (24) benachbart sind,
ii) eine äußere Fläche hat, die eine vordere Vaginafläche (22) und eine hintere Vaginafläche (23) umfasst, und
iii) mindestens einen Durchgang hat, um ein Fluid an den Zervix-Port (24) bereitzustellen, und
c) Mittel (31, 54, 68) zur Lieferung von Flüssigkeit zu dem mindestens einen Durchgang zur Bereitstellung eines Fluids an den Zervix-Port.

2. Vorrichtung nach Anspruch 1, wobei das erste Mittel zur Bereitstellung von Fluiddruck ein Druckluftsystem umfasst.

3. Vorrichtung nach Anspruch 1, wobei das zweite Mittel zur Bereitstellung von örtlichem Fluiddruck in der Druckkammer ein Druckluftsystem umfasst.

4. Vorrichtung nach Anspruch 3, wobei das zweite Mittel zur Bereitstellung von örtlichem Fluiddruck eine Luftlieferdüse in der Nähe der vorderen Vaginafläche des Vaginamodells umfasst.

5. Vorrichtung nach Anspruch 3, wobei das zweite Mittel zur Bereitstellung von örtlichem Fluiddruck zur Lieferung von Druck gesteuert ist, um sowohl dynamische Drücke, die aus der aus Heben, Husten, Lachen, Gehen, tiefem Atmen, Sitzen, Nießen bestehenden Gruppe ausgewählt sind, als auch absichtlich wie durch ein Valsalva-Manöver erzeugte Drücke nachzubilden.

6. Vorrichtung nach Anspruch 1, wobei die Druckkammer um einen Drehzapfen drehbar ist.

7. Vorrichtung nach Anspruch 1, wobei das Vaginamodell ferner eine Vaginaflexur umfasst.

8. Vorrichtung nach Anspruch 1, ferner umfassend eine programmierbare Steuerung.

9. Vorrichtung nach Anspruch 1, wobei das Vaginalumen so angeordnet und konfiguriert ist, dass es das Damenhygieneprodukt durch die Bohrung aufnimmt.

10. Verfahren zur Simulierung von Fluidströmung in einem in einer Druckkammer angeordneten Vaginamodell, wobei das Vaginamodell eine Wand hat, die (1) ein Vaginalumen definiert, das sich von einer Vaginaöffnung, die einer Bohrung durch eine äußere Fläche der Druckkammer zugeordnet ist, nach innen zu Vaginalfornices erstreckt, die einem Zervix-Port benachbart sind, (2) eine äußere Fläche hat, die eine vordere Vaginafläche und eine hintere Vaginafläche umfasst, und (3) mindestens einen Durchgang hat, um ein Fluid an den Zervix-Port bereitzustellen, wobei das Verfahren die folgenden Schritte umfasst:
a) Bereitstellen eines ersten Drucks in der Druckkammer,
b) Liefern von Flüssigkeit zu dem mindestens einen Durchgang zur Bereitstellung eines Fluids an den Zervix-Port und
c) Bereitstellen eines zweiten Drucks auf die vordere Vaginafläche.

11. Verfahren nach Anspruch 10, wobei der erste Druck während einer Simulation im Wesentlichen gehalten wird.

12. Verfahren nach Anspruch 11, wobei der erste Druck zwischen ungefähr 20 cm H₂O und ungefähr 50 cm H₂O gehalten wird.

13. Verfahren nach Anspruch 12, wobei der erste Druck innerhalb von ungefähr 5 cm H₂O eines mittleren Drucks während der Simulation gehalten wird.

14. Verfahren nach Anspruch 10, wobei der zweite Druck größer als der erste Druck ist.

15. Verfahren nach Anspruch 10, wobei der zweite Druck mindestens ungefähr 50 cm H₂O oder mindestens ungefähr 75 cm H₂O beträgt.

16. Verfahren nach Anspruch 10, wobei der zweite Druck für einen Teil einer Simulation bereitgestellt wird.

17. Verfahren nach Anspruch 16, wobei der zweite Druck intermittierend während der Simulation bereitgestellt wird.

18. Verfahren nach Anspruch 17, wobei der zweite Druck für eine Dauer von weniger als ungefähr 10 Sekunden pro Anwendung während der Simulation oder für eine Dauer von weniger als ungefähr 5 Sekunden pro Anwendung während der Simulation bereitgestellt wird.

19. Verfahren nach Anspruch 10, wobei der zweite Druck während einer Simulation variiert.

20. Verfahren nach Anspruch 10, ferner umfassend den Schritt des Ausrichtens des Vaginamodells in Übereinstimmung mit einer stehenden Frau, einer auf dem Rücken liegenden Frau oder dazwischenliegenden Variationen.

## Revendications

1. Appareil pour simuler des structures anatomiques disposées dans la cavité abdominale inférieure d'une femme, comprenant un vagin (20) de femme, l'appareil comprenant :
a) une chambre sous pression (30), comprenant :
i) un intérieur ;
ii) un premier moyen (58) pour fournir une pression de fluide à la chambre sous pression ; et
iii) un second moyen (35, 36, 60) pour fournir une pression localisée de fluide à l'intérieur de la chambre sous pression ;
b) un modèle (20) de vagin disposé à l'intérieur de la chambre sous pression (30) et comprenant une paroi :
i) délimitant une lumière vaginale (21) s'étendant vers l'intérieur d'une ouverture vaginale (25), associée à un alésage via une surface extérieure de la chambre sous pression, aux culs-de-sac vaginaux adjacents à l'orifice (24) du col utérin ;
ii) comportant une surface extérieure comprenant une surface antérieure (22) du vagin et une surface postérieure (23) du vagin, et
iii) comportant au moins un passage pour fournir un fluide à l'orifice (24) du col utérin ; et
c) des moyens (31, 54, 68) pour amener un liquide audit passage pour fournir un fluide à l'orifice du col utérin.

2. Appareil selon la revendication 1, dans lequel le premier moyen pour fournir une pression de fluide comprend un système de mise sous pression d'air.

3. Appareil selon la revendication 1, dans lequel le second moyen pour fournir une pression localisée de fluide à l'intérieur de la chambre sous pression comprend un système de mise sous pression d'air.

4. Appareil selon la revendication 3, dans lequel le second moyen pour fournir une pression localisée de fluide comprend une buse d'écoulement d'air à proximité de la surface antérieure de vagin du modèle de vagin.

5. Appareil selon la revendication 3, dans lequel le second moyen pour fournir une pression localisée de fluide est commandé pour refouler une pression afin de modéliser des pressions dynamiques choisies dans le groupe constitué de levage d'une charge, toux, rire, marche, respiration profonde, position assise, éternuements, ainsi que des pressions créées intentionnellement, par exemple par une manoeuvre de Valsalva.

6. Appareil selon la revendication 1, dans lequel la chambre sous pression peut tourner autour d'un pivot.

7. Appareil selon la revendication 1, dans lequel le modèle de vagin comprend en outre une flexion vaginale.

8. Appareil selon la revendication 1, comprenant en outre un automate programmable.

9. Appareil selon la revendication 1, dans lequel la lumière vaginale est agencée et configurée pour accepter le produit d'hygiène féminine par l'alésage.

10. Procédé pour simuler un écoulement fluidique dans un modèle de vagin disposé dans une chambre sous pression, le modèle de vagin comportant une paroi qui (1) délimite une lumière vaginale s'étendant vers l'intérieur d'une ouverture vaginale, associée à un alésage via une surface extérieure de la chambre sous pression, aux culs-de-sac vaginaux adjacents à l'orifice du col utérin, (2) comporte une surface extérieure comprenant une surface antérieure du vagin et une surface postérieure du vagin, et (3) comporte au moins un passage pour fournir un fluide à l'orifice du col utérin, le procédé comprend les étapes consistant à :
a) fournir une première pression dans la chambre sous pression ;
b) refouler du liquide vers ledit passage pour fournir un fluide à l'orifice du col utérin ; et
c) fournir une seconde pression sur la surface antérieure du vagin.

11. Procédé selon la revendication 10, dans lequel la première pression est sensiblement maintenue pendant une simulation.

12. Procédé selon la revendication 11, dans lequel la première pression est maintenue entre environ 20 cm de H₂O et environ 50 cm de H₂O.

13. Procédé selon la revendication 12, dans lequel la première pression est maintenue dans une plage d'environ 5 cm de H₂O autour d'une pression médiane pendant la simulation.

14. Procédé selon la revendication 10, dans lequel la seconde pression est supérieure à la première pression.

15. Procédé selon la revendication 10, dans lequel la seconde pression est au moins d'environ 50 cm de H₂O ou au moins d'environ 75 cm de H₂O.

16. Procédé selon la revendication 10, dans lequel la seconde pression est fournie pour une partie d'une simulation.

17. Procédé selon la revendication 16, dans lequel la seconde pression est fournie par intermittence pendant la simulation.

18. Procédé selon la revendication 17, dans lequel la seconde pression est fournie pendant une durée inférieure à environ 10 secondes par application pendant la simulation ou pendant une durée inférieure à environ 5 secondes par application pendant la simulation.

19. Procédé selon la revendication 10, dans lequel la seconde pression varie pendant une simulation.

20. Procédé selon la revendication 10, comprenant en outre l'étape consistant à orienter le modèle de vagin de façon à simuler une position de femme debout, de femme couchée allongée ou variable entre les deux.
